# EUROPEAN PATENT APPLICATION

(11) **EP 3 607 830 A1**
(43) Date of publication of application: **12.02.2020**
(21) Application number: 17904388.0
(22) Date of filing: 06.04.2017
(51) Int. Cl.: A23L 3/36, A23L 3/365, A23B 4/06, A23B 7/04

(54) **METHOD FOR FREEZING FROZEN ITEM**

(71) Applicant: Mayatec Co., Ltd., Kobe-shi, Hyogo 650-0024 (JP)
(72) Inventor: GODAI, Tomoyuki, Hyogo 6500024 (JP); HARA, Yuko, Hyogo 6500024 (JP)
(74) Representative: Dehns
(86) International application number: PCT/JP2017/014376
(87) International publication number: WO 2018/185912

(57) **Abstract**

A method of freezing and preserving a frozen object (21) includes: controlling a temperature in a container (10) to keep the temperature at a predetermined freezing temperature and applying an AC voltage to the frozen object (21) such that a weak current (1 µA or more and 1,000 mA or less) flows through the frozen object (21) in the container (10); and while applying the AC voltage to the frozen object (21) in the container (10), freezing and preserving the frozen object (21) at a predetermined freezing temperature for a predetermined preserved period or more.

## Description

### Technical Field

The present invention relates to a method of freezing and preserving a frozen object.

### Background Art

There is known a technique which can suppress quality deterioration (e.g., oxidation or dripping resulting from tissue destruction), which takes place when frozen food is thawed.

For example, there is proposed a method (hereinafter referred to as voltage application thawing) of thawing frozen food while giving, to the frozen food, a function of suppressing quality deterioration of the frozen food using electric energy by applying a predetermined AC voltage to the frozen food such that a weak current flows through the frozen food (see PTL 1, for example).

Further, there is proposed a method of performing the voltage application thawing with respect to frozen food in a similar apparatus to the above, the frozen food being kept at a half-thawed temperature (see PTL 2, for example).

### Citation List

### Patent Literature

PTL 1: International Publication No. 2008/096631
PTL 2: International Publication No. 2015/040816

### Summary of Invention

### Technical Problem

However, the conventional examples do not consider effectiveness (function of suppressing the quality deterioration of the frozen object) of the voltage application with respect to the frozen food during a frozen/preserved period.

One aspect of the present invention was made under these circumstances and provides a method of freezing and preserving a frozen object, the method being able to more appropriately suppress quality deterioration of a frozen object during a frozen/preserved period than before.

### Solution to Problem

To solve the above problem, a method of freezing and preserving a frozen object according to one aspect of the present invention includes: controlling a temperature in a container to keep the temperature at a predetermined freezing temperature and applying an AC voltage to the frozen object such that a weak current (1 µA or more and 1,000 mA or less) flows through the frozen object in the container; and while applying the AC voltage to the frozen object in the container, freezing and preserving the frozen object at the freezing temperature for a predetermined preserved period or more.

### Advantageous Effects of Invention

The method of freezing and preserving the frozen object according to one aspect of the present invention has an effect of being able to more appropriately suppress quality deterioration of a frozen object during a frozen/preserved period than before.

### Brief Description of Drawings

Fig. 1 is a diagram showing one example of a freezer in which a method of freezing and preserving a frozen object according to an embodiment is performed.
Fig. 2 is a diagram showing the freezer of Fig. 1 when viewed from an upper-lower direction.

### Description of Embodiments

The present inventors have been developing techniques for high-quality thawing and freezing of frozen food by making use of the function of the voltage application to the frozen food.

In such technique development process, it has gradually been found that while the frozen food (frozen meat, for example) is frozen and preserved, the quality deterioration of the frozen food slowly proceeds even in a period before an expiration date of the frozen food (a period until the expiration date is, for example, about one or two years although it depends on the type of the food and the like). For example, even when the frozen/preserved period is about three to six months, there is a possibility that oxidation and tissue destruction of the frozen food slowly proceed.

Then, the present inventors have diligently studied, and as a result, have found that by applying an AC voltage to frozen food during the frozen/preserved period, the function of the voltage application is appropriately given to the frozen food, and this suppresses the quality deterioration of the frozen food.

To be specific, a method of freezing and preserving a frozen object according to a first aspect of the present invention was made based on the above findings and includes: controlling a temperature in a container to keep the temperature at a predetermined freezing temperature and applying an AC voltage to the frozen object such that a weak current (1 µA or more and 1,000 mA or less) flows through the frozen object in the container; and while applying the AC voltage to the frozen object in the container, freezing and preserving the frozen object at a predetermined freezing temperature for a predetermined preserved period or more.

With this, the method of freezing and preserving the frozen object according to the first aspect can more appropriately suppress the quality deterioration of the frozen object during the frozen/preserved period than before. To be specific, by applying the AC voltage to the frozen object during the frozen/preserved period, the function of the voltage application is appropriately given to the frozen object. It should be noted that Examples will verify that the function of the voltage application can be appropriately given to the frozen object.

The method of freezing and preserving the frozen object according to a second aspect of the present invention includes: after the freezing and preserving step of the method of freezing and preserving the frozen object according to the first aspect, while applying the AC voltage to the frozen object in the container, thawing the frozen object by controlling the temperature in the container such that the frozen object becomes a half-thawed state.

With this, the method of freezing and preserving the frozen object according to the second aspect can perform half-thawed preservation at 0°C or lower in the thawing of the frozen object. Therefore, the loss of the frozen object can be made smaller than when the frozen object is thawed at normal temperature.

Hereinafter, an embodiment of the present invention will be described with reference to the attached drawings. The embodiment described below is one specific example of the present invention. Therefore, each of numerical values, shapes, materials, components, arrangement positions and connection states of the components, and the like is just one example and does not limit the above aspects.

In the following, frozen food is described as one example of the frozen object. However, the frozen object is not limited to this. For example, the present technique is applicable to freezing and preserving of cultured cells and the like.

Among components in the following embodiment, components that are not recited in an independent claim showing a most generic concept of the present disclosure will be described as optional components. Explanations of components with the same reference sign in the drawings may not be repeated. For ease of understanding, the components in the drawings are schematically shown, and shapes, size ratios, and the like may not be shown accurately.

### Embodiment

### Device Configuration

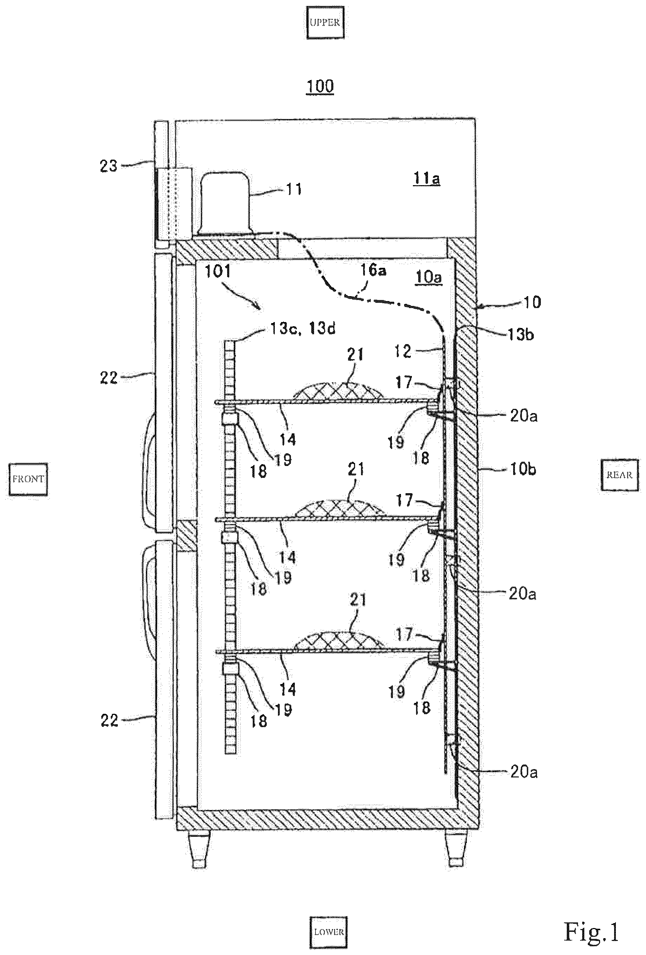

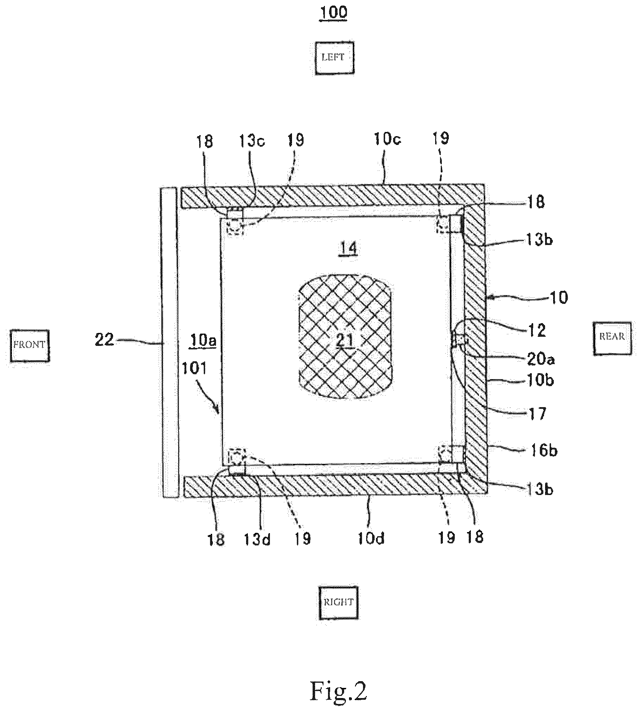

Fig. 1 is a diagram showing one example of a freezer in which a method of freezing and preserving a frozen object according to an embodiment is performed. Fig. 2 is a diagram showing the freezer of Fig. 1 when viewed from an upper-lower direction.

In Figs. 1 and 2, for convenience of explanation, a direction in which the own weight of a freezer 100 acts is referred to as an "upper-lower direction." A side where doors 22 of the freezer 100 are located is referred to as a "front side," and a side opposed to the doors 22 is referred to as a "rear side." A direction perpendicular to both the upper-lower direction and a direction toward the front and rear sides is referred to as a "left-right direction."

The freezer 100 includes a container 10, an AC power generator 11, and a shelf unit 101. The container 10 can adjust a freezer internal temperature such that the temperature of a frozen food 21 becomes a predetermined freezing temperature. The AC power generator 11 is arranged in a space 11a located above the container 10. The shelf unit 101 is arranged in a space 10a of the container 10. The doors 22 are provided such that the space 10a is accessible, and a door 23 is provided such that the space 11a is accessible.

The shelf unit 101 includes metal plates 14, a current supplying rail 12, and rod-shaped metal support bars 13b, 13b, 13c, and 13d. The frozen foods 21 are placed on the metal plates 14. The current supplying rail 12 is electrically connected to the metal plates 14 so as to apply an AC voltage to the metal plates 14. The current supplying rail 12 extends in the upper-lower direction and is made of metal. The metal support bars 13b, 13b, 13c, and 13d support the metal plates 14 through insulators 19.

Each of the metal support bars 13b, 13b, 13c, and 13d is configured to have a ladder shape. With this, hooks 18 can be engaged at suitable height positions of the metal support bars 13b, 13b, 13c, and 13d. To be specific, in the present embodiment, one hook 18 is attached to each of upper, intermediate, and lower stages of each of the four metal support bars 13b, 13b, 13c, and 13d, and the metal plates 14 on which the frozen foods 21 are placed are supported by the insulators 19 provided on the respective hooks 18.

The AC power generator 11 includes a transformer (not shown). One of a pair of secondary terminals of the transformer is electrically connected to the current supplying rail 12 through a wire 16a, and the other (not shown) of the secondary terminals of the transformer is open. Each of plate springs 17 made of metal is provided between the current supplying rail 12 and each metal plate 14. With this, the current supplying rail 12 and the metal plates 14, whose movement within a plane is restricted by suitable fixing means, can electrically and appropriately contact each other by biasing force of the plate springs 17. Thus, one of the pair of secondary terminals of the transformer is electrically connected to the metal plates 14. Further, the metal plates 14 (frozen foods 21) and the other of the pair of secondary terminals of the transformer are insulated from each other by air.

A portion of each of insulators 20a is embedded in a rear side wall 10b of the container 10. The current supplying rail 12 is fixed to tip ends of the insulators 20a.

### Operations

Hereinafter, operations (method of freezing and preserving the frozen foods 21) of the freezer 100 will be described.

First, the door 22 of the container 10 is opened and closed, and the frozen food 21 is put on the metal plate 14. At this time, the temperature of the space 10a of the freezer 100 is adjusted to be set to a desired freezing temperature.

Herein, the freezing temperature is set as a temperature at which breeding of bacteria of the frozen food 21 is suppressed, and original quality of the frozen food 21 is secured for a long period of time. One example of such freezing temperature is a temperature in a temperature range of -18°C or lower.

Next, the temperature in the container 10 is controlled to be kept at the above freezing temperature, and the AC voltage is applied to the frozen food 21 such that the weak current (1 µA or more and 1,000 mA or less) flows through the frozen food 21 in the container 10 (voltage applying step).

Specifically, a primary voltage is applied between a pair of primary terminals of the transformer of the AC power generator 11. This primary voltage is a sine wave AC voltage having a commercial frequency. Then, a secondary voltage is boosted between the secondary terminals of the transformer, and a load voltage obtained by subtracting a voltage drop by a limit resistor (not shown) and the like from the secondary voltage is applied between the frozen food 21 (to be precise, the metal plate 14) and the other of the pair of secondary terminals of the transformer. Therefore, a weak load current corresponding to a load impedance (leak resistance, capacity) between the frozen food 21 and the other of the pair of secondary terminals of the transformer flows through the frozen food 21.

Thus, a predetermined AC power is applied from the AC power generator 11 to the current supplying rail 12, the metal plates 14, and the frozen foods 21.

Herein, it is preferable that the load voltage be 10 V or more and 10 kV or less, and it is more preferable that the load voltage be 100 V or more and 10 kV or less. It is preferable that the load current be 1 µA or more and 1,000 mA or less, and it is more preferable that the load current be 10 µA or more and 100 mA or less.

It should be noted that the above voltage applying step for the frozen foods 21 is one example and is not limited to this example.

Next, while applying the above AC voltage to the frozen food 21 in the container 10, the frozen food 21 is frozen and preserved at the above freezing temperature for a predetermined preserved period or more (freezing and preserving step).

Herein, in the freezing and preserving step, the period in which the frozen food 21 is frozen and preserved is shorter than a period until the expiration date of the frozen food 21 (the period until the expiration date is, for example, about one or two years although it depends on the type of the food and the like) and longer than at least a period (three months, for example) in which the quality deterioration of the frozen foods 21 becomes obvious.

After the above freezing and preserving step, the temperature in the container 10 may be controlled such that the frozen food 21 become a half-thawed state, and while applying the above AC voltage to the frozen food 21 in the container 10, the frozen food 21 may be thawed (half-thawing step). With this, the half-thawed preservation of the frozen food 21 at 0°C or lower can be performed in the thawing of the frozen food 21. Therefore, the loss of the frozen foods 21 can be made smaller than when the frozen foods 21 are thawed at normal temperature. It should be noted that the half-thawing is, for example, thawing in which the temperature of the frozen food 21 is in a range of 0°C to -10°C.

It is thought that if the period in which the frozen food 21 is frozen and preserved is shorter than the period (three months, for example) in which the quality deterioration of the frozen food 21 becomes obvious, the quality deterioration of the thawed food is appropriately suppressed by applying the above AC voltage to the frozen food 21 only when the frozen food 21 is half-thawed.

As above, the method of freezing and preserving the frozen food 21 according to the present embodiment can more appropriately suppress the quality deterioration of the frozen food 21 during the frozen/preserved period than before. To be specific, by applying the above AC voltage to the frozen food 21 during the frozen/preserved period, the function of the voltage application is appropriately given to the frozen food 21. Examples below will verify that the function of the voltage application can be appropriately given to the frozen food 21.

### Examples

Whether or not the function of the voltage application can be appropriately given to the frozen food 21 by applying the above AC voltage to the frozen food 21 during the frozen/preserved period was verified by Examples 1 and 2 and Comparative Examples 1 and 2. To be specific, as shown in Table 1, experimental conditions were set to be the same among the frozen foods 21 of Examples 1 and 2 and Comparative Examples 1 and 2 except that the AC voltage was applied or not applied to the frozen foods 21, and the freezing and preserving and the thawing were performed (after the thawing, the foods were preserved under the same conditions; hereinafter referred to as "thawing/preserving").

**Table 1**

| | Freezing and Preserving | Thawing/Preserving |
|---|---|---|
| Example 1 | Voltage Application Performed | Voltage Application Performed |
| Example 2 | Voltage Application Performed | Voltage Application Not Performed |
| Comparative Example 1 | Voltage Application Not Performed | Voltage Application Performed |
| Comparative Example 2 | Voltage Application Not Performed | Voltage Application Not Performed |

### Experimental Conditions

### Frozen Foods 21

As the frozen foods 21, frozen U.S. pork was used. This frozen pork was a pork block which was frozen at a temperature of -18°C or lower on May 21, 2016 in the U.S. and imported to Japan by using a freezing container.

It should be noted that a start date of a verification experiment by using the freezer 100 was June 27, 2016. To be specific, the above frozen pork was in a distribution process for about one month in a frozen and preserved state at -18°C or lower without the application of the AC voltage.

### Frozen/Preserved Period of Frozen Foods 21

In the freezer 100, the frozen foods 21 were frozen and preserved for 225 days (about seven months) after the above AC voltage was applied to the frozen foods 21.

### Temperature Condition of Freezer 100

A freezer internal temperature of the freezer 100 was kept in a range of -32°C to -25°C during the frozen/preserved period (about seven months). The average temperature was about -30°C. It should be noted that the above freezer internal temperature is a value actually measured by inserting a thermometer (not shown) into an appropriate position in the freezer 100.

### Applied Voltage of Frozen Foods 21

An AC voltage of 3.0 kV (p-p value) was applied to the frozen foods 21.

### Conditions of Thawing/Preserving

After the frozen foods 21 were frozen and preserved for 225 days (about seven months), the freezer internal temperature was kept at -5°C, and the frozen foods 21 were thawed/preserved at a half-thawed temperature for four days.

It should be noted that the above experimental conditions are just examples and are not limited to the examples.

### Evaluation Method

The following two types of visual evaluations of the pork and a taste evaluation of boiled pork were performed.

A first visual evaluation was performed in such a manner that the thawed/preserved pork block was slice-cut by a slicer, and the state of a cut surface of the pork was visually observed.

A second visual evaluation was performed in such a manner that the slice-cut pork was boiled at a boiling temperature, and the generation of scum (turbidity of hot water) was visually observed.

The taste evaluation was performed in such a manner that twelve evaluators tasted four types of boiled pork in a blind manner and numbers the four types of boiled pork from No. 1 to No. 4 in order of deliciousness.

### Evaluation Results

### Comparative Example 2

### (1) First Visual Evaluation

Immediately after the pork was slice-cut, ice particles were observed on the cut surface of the pork. Further, after the slice-cut pork was left for a while at room temperature, the ice melted, and the slice-cut pork became a sponge state. Furthermore, after the slice-cut pork was left for a while at room temperature, the color of a lean part of the pork faded and became whitish.

The above facts proved that regarding the pork of Comparative Example 2, the amount of dripping generated by the tissue destruction was large. To be specific, it is thought that the ice particles were formed by freezing water containing nutriment of pork in an ice crystal generation temperature range. Further, it is thought that the color fading of the lean part was caused since the nutriment of the pork flowed to an outside.

Immediately after the pork was slice-cut, the color of the lean part on the cut surface of the pork was dark, and this part was already in a colored state. Further, the color of a fat part of the pork was discolored into yellow.

The above facts proved that immediately after the pork of Comparative Example 2 was slice-cut, the oxidation proceeded. To be specific, it is thought that the coloring of the lean part and the discoloration of the fat part immediately after the pork was slice-cut are respectively oxidation coloring and oxidation discoloration of the pork at the time of the freezing and preserving or at the time of the thawing/preserving.

### (2) Second Visual Evaluation

When the slice-cut pork was boiled, a large amount of scum was generated, and the turbidity of the hot water was high.

The above facts proved that regarding the pork of Comparative Example 2, the amount of dripping generated by the tissue destruction was large. To be specific, the scum generated during the boiling was protein melted from the pork into the hot water.

### (3) Taste Evaluation

As shown in Table 2 below, the average of evaluation points of the twelve evaluators was 3.00. To be specific, in the taste evaluation, the pork of Comparative Example 2 obtained the second lowest rank.

### Comparative Example 1

### (1) First Visual Evaluation

Since the evaluation of the pork of Comparative Example 1 was the same as the evaluation of the pork of Comparative Example 2, an explanation thereof is omitted.

### (2) Second Visual Evaluation

Since the evaluation of the pork of Comparative Example 1 was the same as the evaluation of the pork of Comparative Example 2, an explanation thereof is omitted.

### (3) Taste Evaluation

As shown in Table 2 below, the average of the evaluation points of the twelve evaluators was 3.17. To be specific, in the taste evaluation, the pork of Comparative Example 1 obtained the lowest rank.

### Example 1

### (1) First Visual Evaluation

The cut surface of the pork was smooth, and ice particles were not observed (fine frost was observed). Even after the slice-cut pork was left for a while at room temperature, the amount of dripping generated was small.

The above facts proved that regarding the pork of Example 1, the amount of dripping generated by the tissue destruction was small.

Immediately after the pork was slice-cut, the color of the lean part on the cut surface of the pork was dark. However, after the pork was left for a while at room temperature, the color of the lean part of the pork became vivid. Further, the discoloration of the fat part was small, and the vivid color (whitish color) of the fat part was kept.

The above facts proved that regarding the pork of Example 1, the oxidation was appropriately suppressed at the time of the freezing and preserving and the thawing/preserving. To be specific, it is thought that the coloring of the lean part of the pork when the pork was left at room temperature was caused by contact with oxygen in the air. Therefore, such phenomenon indicates that before the pork was slice-cut, the oxidation of the pork did not proceed.

### (2) Second Visual Evaluation

When the slice-cut pork was boiled, the amount of scum generated was the smallest, and the turbidity of the hot water was the least conspicuous.

The above facts proved that regarding the pork of Example 1, the amount of dripping generated by the tissue destruction was the smallest.

### (3) Taste Evaluation

As shown in Table 2 below, the average of the evaluation points of the twelve evaluators was 1.58. To be specific, in the taste evaluation, the pork of Example 1 obtained the highest rank.

### Example 2

### (1) First Visual Evaluation

Since the evaluation of the pork of Example 2 was the same as the evaluation of the pork of Example 1, an explanation thereof is omitted.

### (2) Second Visual Evaluation

When the slice-cut pork was boiled, it was confirmed that the scum was generated, and the hot water was turbid, but the pork of Example 2 was apparently better than the pork of Comparative Example 1 and the pork of Comparative Example 2.

The above facts proved that regarding the pork of Example 2, the amount of dripping generated by the tissue destruction is smaller than that of the pork of Comparative Example 1 and that of the pork of Comparative Example 2.

### (3) Taste Evaluation

As shown in Table 2 below, the average of the evaluation points of the twelve evaluators was 2.25. To be specific, in the taste evaluation, the pork of Example 1 obtained the second highest rank.

**Table 2**

| Evaluators | A | B | C | D | E | F | G | H | I | J | K | L | Average |
|---|---|---|---|---|---|---|---|---|---|---|---|---|---|
| Example 1 | 1 | 3 | 2 | 1 | 1 | 1 | 2 | 1 | 2 | 2 | 2 | 1 | 1.58 |
| Example 2 | 2 | 2 | 1 | 2 | 2 | 2 | 1 | 2 | 3 | 3 | 4 | 3 | 2.25 |
| Comparative Example 1 | 4 | 4 | 4 | 4 | 4 | 4 | 3 | 3 | 1 | 4 | 1 | 2 | 3.17 |
| Comparative Example 2 | 3 | 1 | 3 | 3 | 3 | 3 | 4 | 4 | 4 | 1 | 3 | 4 | 3.00 |

### Comparisons of Evaluation Results

It was verified by the comparison between Example 1 and Comparative Example 1 and the comparison between Example 2 and Comparative Example 2 that the function of the voltage application can be appropriately given to the frozen foods 21 by applying the above AC voltage to the frozen foods 21 during the frozen/preserved period.

Further, it was found from the comparison between Comparative Example 1 and Comparative Example 2 that when the above AC voltage was not applied to the frozen food 21 during the frozen/preserved period (i.e., when it is thought that the quality deterioration of the frozen foods 21 has proceeded during the frozen/preserved period), it is difficult to appropriately give the function of the voltage application to the frozen food 21 even if the above AC voltage was applied to the frozen food 21 at the time of the thawing/preserving.

Furthermore, it was found from the comparison between Example 1 and Example 2 that the application of the above AC voltage to the frozen food 21 at the time of the thawing/preserving is effective for suppressing the dripping generated by the tissue destruction of the frozen food 21 at the time of the thawing/preserving and for improving the taste.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

One aspect of the present invention can be utilized as a method of freezing and preserving a frozen object, the method more appropriately suppressing quality deterioration of the frozen object during a frozen/preserved period than before.

### Reference Signs List

- 10: container
- 11: AC power generator
- 14: metal plate
- 17: elastic member (plate spring)
- 18: hook
- 21: frozen food
- 22, 23: door
- 100: freezer
- 101: shelf unit

## Claims

1. A method of freezing and preserving a frozen object,
the method comprising:
controlling a temperature in a container to keep the temperature at a predetermined freezing temperature and applying an AC voltage to the frozen object such that a weak current (1 µA or more and 1,000 mA or less) flows through the frozen object in the container; and
while applying the AC voltage to the frozen object in the container, freezing and preserving the frozen object at the freezing temperature for a predetermined preserved period or more.

2. The method according to claim 1, further comprising, after the freezing and preserving step, while applying the AC voltage to the frozen object in the container, thawing the frozen object by controlling the temperature in the container such that the frozen object becomes a half-thawed state.
